# FASCICULE DE BREVET EUROPEEN

(11) **EP 2 058 226 B1**
(45) Date de publication et mention de la délivrance du brevet: **12.05.2010**
(21) Numéro de dépôt: 08018943.4
(22) Date de dépôt: 30.10.2008
(51) Int. Cl.: B64C 11/00, B64C 21/04, B64C 27/20, B64C 27/82

(54) **Aéronef muni d'un rotor caréné silencieux**
Luftfahrzeug mit geräuscharmen ummantelten Rotor
Aircraft equipped with a silent shrouded rotor

(30) Priorité: 08.11.2007 FR 0707834
(43) Date de publication de la demande: 13.05.2009
(73) Titulaire: EUROCOPTER, 13725 Marignane Cédex (FR)
(72) Inventeur: Marze, Henri-James, 13340 Rognac (FR)
(74) Mandataire: GPI & Associés

(56) Documents cités:
- FR-A- 2 719 550
- GB-A- 910 679
- US-A- 5 131 604
- US-A- 5 727 381

## Description

La présente invention concerne un aéronef muni d'un rotor caréné silencieux, et plus particulièrement un rotor arrière caréné d'un hélicoptère.

En effet, un hélicoptère comporte généralement un unique rotor principal entraîné mécaniquement par au moins un turbomoteur, le rotor principal assurant la sustentation et la propulsion de l'hélicoptère.

Ce type d'hélicoptère est alors pourvu d'un rotor arrière qui assure une fonction anti-couple afin de compenser le couple créé par la rotation du rotor principal en exerçant une poussée transversale.

De plus, le rotor arrière permet au pilote de contrôler les évolutions en lacet et en virage de l'hélicoptère en exerçant une poussée transversale positive ou négative.

On connaît un rotor arrière non caréné, dénommé « rotor arrière classique » par commodité, remplissant cette fonction. Classiquement, le rotor arrière non caréné est monté latéralement sur une extrémité supérieure de l'empennage ou sur une extrémité de la poutre de queue de l'hélicoptère.

Ce rotor arrière non caréné est couramment utilisé.
Néanmoins, il est possible d'implémenter un rotor arrière caréné, connu sous la marque fenestron®

Le rotor arrière caréné est alors agencé dans une veine ménagée dans la partie inférieure de la dérive verticale de l'empennage de l'hélicoptère, l'axe longitudinal de la veine étant sensiblement perpendiculaire au plan de symétrie vertical de l'hélicoptère.

Par suite, la structure profilée de la dérive verticale de l'hélicoptère entoure ladite veine et donc le rotor arrière, ce qui explique cette dénomination de rotor arrière caréné. On note que cette structure profilée est généralement dénommée « carène » par l'homme du métier.

La structure profilée protège alors le rotor arrière caréné contre les impacts. De même, elle augmente la sécurité du personnel au sol, en évitant que ce personnel puisse être blessé par le rotor arrière caréné.

De plus, d'un point de vue acoustique, le rotor arrière caréné constitue un net progrès par rapport à un rotor arrière non caréné.

En effet, la structure profilée qui entoure la veine, dans laquelle est agencé le rotor arrière caréné, empêche une diffusion des bruits vers l'avant et vers l'arrière du giravion, alors qu'un rotor arrière non caréné diffuse du bruit dans toutes les directions.

Par conséquent, l'implémentation d'un rotor arrière caréné réduit les nuisances sonores d'un hélicoptère.

Par ailleurs, le document FR2719550 décrit un rotor arrière caréné optimisé d'un point du vue acoustique.

Le rotor arrière caréné est agencé dans une veine d'écoulement d'air ayant un axe transversal à l'hélicoptère, un stator redresseur étant fixé dans la veine d'écoulement d'air en amont du rotor arrière caréné.

Ce rotor arrière caréné comporte une pluralité de pales réparties de façon irrégulière telle que tout angle entre deux pales quelconques du rotor arrière caréné est différent de tout angle entre deux aubes quelconques du redresseur.

Néanmoins, on constate en pratique qu'un rotor arrière caréné reste à l'origine de bruits non négligeables, notamment lorsque l'hélicoptère se déplace à une vitesse moyenne supérieure à 80 noeuds par exemple.

La présente invention a alors pour objet de proposer un moyen permettant de minimiser le bruit généré par un rotor caréné d'un aéronef, tel qu'un rotor arrière caréné d'un hélicoptère.

Selon l'invention, un aéronef comporte une structure profilée traversée par une veine d'écoulement d'air pourvue d'un axe de symétrie contenu dans un plan de symétrie perpendiculaire à un axe longitudinale de l'aéronef, cet aéronef possédant un rotor caréné ayant une pluralité de pales agencées dans ladite veine d'écoulement d'air.

La périphérie de ladite veine d'écoulement d'air, à savoir la paroi périphérique circulaire de la veine, étant munie successivement selon son axe de symétrie d'une première lèvre, d'une partie intermédiaire puis d'une deuxième lèvre, la première lèvre ayant une première portion avant située du côté de la veine le plus proche de l'avant de l'aéronef et une première portion arrière du côté de la veine le plus proche de l'arrière de l'aéronef, la deuxième lèvre étant pourvue d'une deuxième portion avant située du côté de la veine le plus proche de l'avant de l'aéronef et d'une deuxième portion arrière du côté de la veine le plus proche de l'arrière de l'aéronef. Cet aéronef est alors équipée d'un moyen de soufflage, pour réduire le bruit généré par le rotor caréné, qui est apte à propulser de l'air comprimé vers une première zone d'injection débouchant sur la première portion avant de la première lèvre et vers une deuxième zone d'injection débouchant sur la deuxième portion avant de la deuxième lèvre.

Lorsque l'aéronef est un hélicoptère, le rotor caréné est par exemple le rotor arrière caréné disposé dans une veine d'écoulement d'air traversant la structure profilée de la dérive verticale de l'hélicoptère.

De manière surprenante, on constate que le bruit généré par le rotor caréné, le rotor arrière caréné constituant le fenestron® d'un hélicoptère par exemple, est considérablement diminué lorsque l'on met en oeuvre l'invention, notamment lorsque l'hélicoptère se déplace à une vitesse moyenne supérieure à 80 noeuds par exemple où le bruit généré par le rotor caréné est habituellement prépondérant.

En effet, la demanderesse a constaté que le bruit généré dans cette plage de vitesse sur les hélicoptères classiques était provoqué par un décollement des filets d'air entrant dans la veine d'écoulement d'air.

Quand l'hélicoptère se déplace, l'air entrant dans la veine d'écoulement opère un virage sensiblement à quatre vingt dix degrés.

A faible vitesse les filets d'air peuvent effectuer ce virage sans problème. Les filets d'air collent alors à la périphérie de la veine d'écoulement d'air.

A contrario, la demanderesse a observé avec surprise un décollement des filets d'air à partir d'une vitesse moyenne, de l'ordre de 80 noeuds, au niveau des première et deuxième portions avant des première et deuxième lèvres, de façon non simultanée. Chaque extrémité de pales passe alors rapidement d'un écoulement stabilisé à une zone décollée remplie de fluide mort ce qui s'avère très violent d'un point de vue acoustique.

Lorsque l'hélicoptère se déplace à une vitesse moyenne, le bruit ainsi généré est prépondérant. Toutefois, à haute vitesse, le rotor principal couvre le bruit engendré par le rotor arrière caréné.

Les essais de certification étant uniquement réalisés à vitesse moyenne, le problème à l'origine du bruit ne pouvait être identifié qu'en exerçant une activité particulièrement inventive.

En injectant de l'air comprimé dans les première et/ou deuxième zones d'injection, suivant le sens d'écoulement de l'air dans la veine d'écoulement d'air, le moyen de soufflage remplit la bulle d'air créée par le décollement des filets d'air ce qui permet à ces filets de recoller à la périphérie de la veine.

Par suite, les pales du rotor ne passant plus d'un écoulement stabilisé à une zone décollée remplie par un fluide mort, le rotor arrière caréné n'est plus à l'origine de bruits intenses. On observe une amélioration substantielle, le bruit généré par le rotor arrière étant diminué d'au moins cinq décibels.

De surcroit, il est avantageux que le moyen de soufflage propulse de l'air comprimé vers au moins la première lèvre, via la première zone d'injection, lorsque le rotor caréné génère une circulation d'air allant de la première lèvre vers la deuxième lèvre. A contrario, le moyen de soufflage propulse de l'air comprimé vers au moins la deuxième lèvre via la deuxième zone d'injection lorsque le rotor caréné génère une circulation d'air allant de la deuxième lèvre vers la première lèvre.

Plus particulièrement, le pas des pales étant compris entre un pas négatif maximal prédéterminé et un pas négatif minimal prédéterminé, le rotor caréné génère une circulation d'air de la première lèvre vers la deuxième lèvre. Par suite, le moyen de soufflage propulse de l'air comprimé uniquement vers la première lèvre via la première zone d'injection.

De même, lorsque le pas des pales est compris entre un pas positif minimal prédéterminé et un pas positif maximal prédéterminé, le rotor caréné génère une circulation d'air de ladite deuxième lèvre vers ladite première lèvre. Alors, le moyen de soufflage propulse de l'air comprimé uniquement vers la deuxième lèvre via la deuxième zone d'injection.

On note que si le pas des pales est compris entre le pas minimal négatif et le pas minimal positif, alors le moyen de soufflage propulse de l'air comprimé vers les première et deuxième lèvres.

Par contre, quand le pas des pales est inférieur à un pas maximal négatif prédéterminé, ledit moyen de soufflage ne propulse pas de l'air comprimé vers lesdites première et deuxième lévres.

De même, le pas des pales étant supérieur à un pas maximal prédéterminé, le moyen de soufflage ne propulse pas de l'air comprimé vers lesdites première et deuxième lèvres.

Ces caractéristiques techniques particulièrement intéressantes permettent d'optimiser l'efficacité du moyen de soufflage.

L'explication des avantages obtenus par ces caractéristiques est intimement liée au fonctionnement du rotor caréné, particulièrement s'il s'agit d'un rotor arrière caréné d'hélicoptère.

En effet, un rotor arrière caréné exerce une poussée transverse pour contrecarrer le couple généré par le rotor principal ou pour faire tourner l'hélicoptère par exemple.

Ce rotor arrière caréné exerce ainsi une poussée dans une direction positive lorsque l'hélicoptère est en mode « traction », à savoir quand le pas des pales est positif. A contrario, le rotor arrière caréné exerce une poussée dans une direction négative, opposée à la direction positive, lorsque l'hélicoptère est en mode « reverse », à savoir quand le pas des pales du rotor arrière est négatif.

Par suite, quand ce pas des pales est inférieur à un pas maximal négatif, et donc compris entre -90° et un pas maximal négatif de -10° par exemple, le rotor arrière exerce une poussée négative importante. Les filets d'air sont aspirés à une vitesse non négligeable dans la veine d'écoulement d'air ce qui leur permet de coller à la périphérie de cette veine, notamment dans sa périphérie avant la plus proche de l'avant de l'aéronef. On peut donc éventuellement éviter une utilisation du moyen de soufflage.

Lorsque le pilote diminue le pas de pales, ce pas atteint une valeur comprise entre un pas maximale négatif et un pas minimal négatif prédéterminés, par exemple entre un pas maximal négatif de -10° et un pas minimal négatif de -1°. Le rotor arrière caréné n'engendre pas une aspiration suffisante pour éviter un décollement des filets d'air et donc la création d'une bulle de fluide mort génératrice de bruits.

L'hélicoptère étant en mode « reverse », l'air circule dans la veine d'air en allant de la première lèvre vers la deuxième lèvre. Par conséquent, le moyen de soufflage alimente en air comprimé la première zone d'injection pour supprimer la bulle de fluide mort.

Ensuite, quand l'hélicoptère se déplace rapidement, sa dérive verticale est suffisante pour contrecarrer le couple du rotor principal.

Le pilote, en vol de translation, n'a donc pas besoin de requérir une poussée importante de la part de son rotor arrière.

Le pas des pales est alors compris entre un pas minimal négatif et un pas minimal positif prédéterminés, entre un pas minimal négatif de -1° et un pas minimal positif de +1° par exemple.

Par conséquent, le moyen de soufflage alimente avantageusement à la fois les première et deuxième zones d'injection pour supprimer la bulle de fluide mort,

Comme précédemment, en mode « traction », entre un pas minimal positif et un pas maximal positif, par exemple entre un pas minimal positif de +1° et un pas maximal positif de +11°, le moyen de soufflage alimente en air comprimé la première zone d'injection pour supprimer cette bulle de fluide mort.

Enfin, au-delà de ce pas maximal positif, le moyen de soufflage n'est pas activé et n'alimente ni la première zone d'injection ni la deuxième zone d'injection.

Par ailleurs, pour optimiser la distribution d'air comprimé, chaque zone d'injection décrit éventuellement un champ angulaire compris entre 0 et 180 degrés non inclus, en fonction de la vitesse de vol de l'aéronef ainsi que de son angle de dérapage.

Selon une première configuration de l'invention, au moins une zone d'injection comporte une fente, le long de l'intégralité de la zone d'injection.

Selon une deuxième configuration de l'invention, au moins une zone d'injection comporte une succession d'orifices.

Pour remplir sa fonction, le moyen de soufflage peut comporter une prise d'air qui alimente en air à souffler une vanne apte à faire parvenir l'air à souffler aux première et deuxième zones d'injection respectivement par un premier et un deuxième canaux d'alimentation.

La vanne, une vanne à trois voies par exemple, permet donc d'alimenter en air à souffler les première et deuxième zones d'injection, conjointement ou non en fonction du besoin. De même, la vanne peut condamner l'accès à ces première et deuxième zones d'injection.

Selon un premier mode de réalisation, la prise d'air étant une prise d'air dynamique captant l'air à souffler grâce au déplacement de l'aéronef, la vanne est reliée à la prise d'air dynamique par un tuyau d'acheminement.

Cette installation est très simple à réaliser, à moindre coût, ce qui présente un avantage non négligeable.

La mise en pression de l'air à souffler capté peut alors être accomplie en jouant sur le diamètre du tuyau d'acheminement ou encore en agençant un compresseur sur le tuyau d'acheminement.

Selon un deuxième mode de réalisation, la prise d'air étant une prise d'air statique, la vanne est reliée à cette prise d'air statique par un tuyau d'acheminement muni d'un compresseur permettant à la prise d'air statique d'aspirer l'air à souffler.

Ce mode de réalisation présente l'avantage de pouvoir être arrêté sur commande. En stoppant le compresseur, on s'assure que la prise d'air ne captera plus l'air à souffler.

Quel que soit le mode de réalisation, le compresseur est commandé soit électriquement, en comportant un pompe usuelle par exemple, soit mécaniquement.

Dans cette dernière alternative, le compresseur peut être entraîné par l'arbre de transmission mettant en rotation le moyeu du rotor caréné, via une courroie par exemple. De même, le compresseur peut être pourvu d'ailettes disposées sur cet arbre de transmission pour diriger l'air à souffler provenant de la prise d'air vers la vanne.

Par ailleurs, le pas des pales d'un rotor arrière caréné est classiquement ajusté par le pilote en manoeuvrant un palonnier relié par un moyen de transmission à une servocommande qui agit sur un plateau de commande de pas apte à modifier ce pas de pales. Avantageusement, le moyen de soufflage est alors commandé par le moyen de transmission reliant le palonnier à la servocommande.

Effectivement, en fonction de ce pas des pales du rotor caréné, nous pouvons déterminer si le moyen de soufflage doit envoyer de l'air comprimé vers les première et deuxième portions avant des première et deuxième lèvres de la veine d'écoulement. Le moyen de transmission, qui permet de régler le pas des pales lorsqu'il est déplacé par le palonnier, devient donc un excellent moyen de commande de la position de la vanne du moyen de soufflage.

Selon une deuxième variante, l'aéronef étant pourvu d'une part d'un capteur de pression de référence disposé sur une face latérale de la structure profilée et, d'autre part, d'un capteur de pression de détection agencé sur la périphérie de la veine entre les première et deuxième zones d'injection d'air, l'aéronef comporte un moyen de commande recevant un premier et un deuxième signaux respectivement des capteurs de pression de référence et de détection pour déterminer si le moyen de soufflage doit être activé.

L'invention et ses avantages apparaîtront avec plus de détails dans le cadre de la description qui suit avec des exemples de réalisation donnés à titre illustratif en référence aux figures annexées qui réprésentent :
- la figure 1, une coupe horizontale présentant le phénomène à l'origine du bruit généré par le rotor caréné,
- la figure 2, une coupe horizontale schématique explicitant le fonctionnement de l'invention via le premier mode de réalisation,
- la figure 3, une coupe verticale présentant le premier mode de réalisation de l'invention,
- la figure 4, une coupe verticale présentant le deuxième mode de réalisation de l'invention,
- la figure 5, une coupe horizontale présentant un moyen de soufflage commandé par une tige de commande de pas,
- la figure 6, un diagramme explicitant le fonctionnement d'une variante du moyen de soufflage, et
- la figure 7, une coupe verticale présentant un moyen de soufflage commandé par un moyen de commande dédié.

Les éléments présents dans plusieurs figures distinctes sont affectés d'une seule et même référence.

On note que trois directions X. Y et Z orthogonales les unes par rapport aux autres sont représentées sur les figures.

La direction X est dite longitudinale dans la mesure où elle est dirigée selon la longueur de l'aéronef.

Une autre direction Y est dite transversale.

Enfin, une troisième direction Z est dite d'élévation et correspond aux dimensions en hauteur des structures décrites.

Ainsi, le plan (X, Y), défini par les directions longitudinale X et transversale Y, est dénommé plan horizontal puisque que ce plan est sensiblement perpendiculaire à la pesanteur.

A contrario, le plan (Y, Z), défini par les directions transversale Y et en élévation Z, est dénommé plan transversal par commodité. Ce plan (Y, Z) transversal est perpendiculaire à la direction longitudinale X.

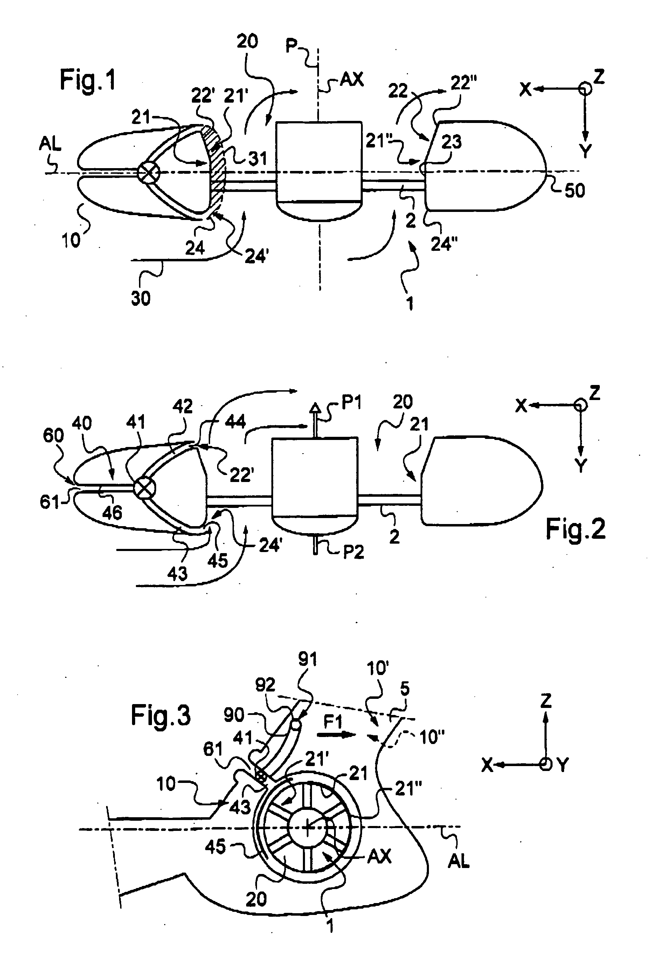

La figure 1 présente une coupe horizontale explicitant le phénomène à l'origine du bruit généré par le rotor caréné 1. Plus précisément, ce rotor caréné 1 est un rotor arrière caréné d'un hélicoptère de type fenestron®.

Par suite, cet aéronef comporte une structure profilée 10, à savoir une dérive verticale, traversée dans sa partie inférieure par une veine d'écoulement d'air 20 dont l'axe de symétrie AX est contenu dans un plan de symétrie P perpendiculaire à un axe longitudinal AL de l'hélicoptère. Le plan de symétrie P est alors parallèle au plan transversale (Y, Z), alors que l'axe longitudinal AL est confondu avec la direction longitudinale X.

Le rotor caréné 1, muni d'une pluralité de pales 2, est alors agencé dans la veine 20 d'écoulement d'air.

On note que cette veine 20 d'écoulement d'air comporte successivement selon son axe de symétrie AX, et à sa périphérie 21, une première lèvre 22 formant un cône divergent, un partie intermédiaire 23 puis une deuxième lèvre arrondie 24.

Plus précisément, la périphérie 21 de la veine 20 d'écoulement d'air comporte une périphérie avant 21' de son côté le plus proche de l'avant de l'hélicoptère et une périphérie arrière 21" de son côté le plus proche de l'arrière 50 de l'hélicoptère. La première lèvre 22 possède alors une première portion avant 22' située du côté de la périphérie avant 21' de la veine la plus proche de l'avant de l'hélicoptère et une première portion arrière 22" située du côté de la périphérie arrière 21" de la veine la plus proche de l'arrière 50 de l'hélicoptère. De même, la deuxième lèvre 24 est pourvue d'une deuxième portion avant 24' située du côté de la périphérie avant 21' de la veine la plus proche de l'avant de l'hélicoptère et d'une deuxième portion arrière 24" située du côté de la périphérie arrière 21" de la veine la plus proche de l'arrière de l'hélicoptère.

Lorsque l'hélicoptère est en vol d'avancement, en se déplaçant selon la direction longitudinale X, la veine 20 d'écoulement d'air est traversée par des filets d'air 30.

Néanmoins, en fonction de la vitesse d'avancement et du pas des pales 2, il est possible que ces filets d'air 30 ne collent pas à la périphérie avant 21' de la veine 20 d'écoulement d'air.

Ce décollement des filets d'air entraine la formation d'une bulle 31, remplie de fluide mort, qui est à l'origine du bruit excessif produit par le rotor caréné 1.

En référence à la figure 2, quel que soit son mode de réalisation, l'invention comporte un moyen de soufflage 40.

Ce moyen de soufflage 40 achemine de l'air à souffler comprimé, prélevé à l'aide d'une prise d'air 60, vers une première zone d'injection 44 par un premier canal 42, cette première zone d'injection débouchant sur la première portion avant 22' de la première lèvre 22. De même, le moyen de soufflage 40 achemine de l'air à souffler comprimé, prélevé à l'aide de la prise d'air 60, vers une deuxième zone d'injection 45 par un deuxième canal 43, cette deuxième zone d'injection 45 débouchant sur la première portion avant 24' de la deuxième lèvre 24.

On note que le moyen de soufflag® 40 est muni d'une vanne 41 permettant d'alimenter le première zone d'injection 44, ou la deuxième zone d'injection 45, ou encore les première et deuxième zones d'injection 44, 45 de manière simultanée.

De plus, il est envisageable que la vanne n'alimente ni la première zone d'injection 44, ni la deuxième zone d'injection 45. Afin d'éviter une éventuelle surpression, la vanne peut aussi évacuer l'air à souffler capté par la prise d'air vers une zone d'éjection vers l'extérieur.

Par conséquent, lorsque le pas des pales 2 est compris entre un pas maximal négatif et un pas minimal négatif, le rotor caréné 1 exerce une poussée « négative » selon la flèche P1, Le rotor caréné 1 générant une circulation d'air de la première lèvre vers la deuxième lèvre, la vanne 41 du moyen de soufflage 40 envoie l'air à souffler vers la première zone d'injection 44.

L'air à souffler injecté remplit la bulle de fluide mort ce qui permet aux filets d'air de coller à la périphérie avant 21' de la veine 20 d'écoulement d'air. La suppression de cette bulle de fluide mort permet de limiter sérieusement le bruit généré par le rotor caréné 1.

Lorsque le pas des pales 2 est compris entre un pas minimal négatif et un pas minimal positif, alors la vanne 41 du moyen de soufflage 40 envole l'air à souffler vers la première zone d'injection 44 et la deuxième zone d'injection 45.

A contrario, quand le pas des pales 2 est compris entre un pas minimal positif et un pas maximal positif, le rotor caréné 1 exerce une poussée « positive » selon la flèche P2. Le rotor caréné 1 générant une circulation d'air de la deuxième lèvre vers la première lèvre, la vanne 41 du moyen de soufflage 40 envoie l'air à souffler vers la deuxième zone d'injection 45.

Enfin, lorsque le pas des pales est inférieur au pas maximal négatif, ou supérieur au pas maximal positif, alors la vanne 41 n'envoie l'air à souffler ni vers la première zone d'injection ni vers la deuxième zone d'injection, mais éventuellement vers une zone d'éjection qui n'est pas susceptible de perturber le fonctionnement du rotor caréné.

Selon le premier mode de réalisation représenté sur la figure 2, la prise d'air 60 comporte une prise d'air dynamique 61 reliée à la vanne 41 par un tuyau d'acheminement 46.

Au cours du déplacement de l'hélicoptère, l'air à souffler pénètre naturellement dans la prise d'air dynamique et alimente donc la vanne 41 puis les première et deuxième zones d'injection 44, 45.

En outre, le diamètre du tuyau d'acheminement étant inférieur au diamètre de la prise d'air dynamique, l'air à souffler est comprimé lors de son entrée dans ce tuyau d'acheminement.

Il est à noter que de manière optionnelle, il est envisageable d'agencer un compresseur dans le tuyau d'acheminement.

En fonction de la variante mise en oeuvre, le compresseur pourra être un compresseur électrique ou bien un compresseur mécanique.

La figure 3 présente une coupe verticale de la dérive verticale 5 de l'aéronef, un hélicoptère, selon l'invention.

Le rotor caréné 1 est agencé dans une veine 20 d'écoulement d'air ménagée dans la partie inférieure de la structure profilée 10 de la dérive verticale 5, l'axe de symétrie AX de la veine 20 d'écoulement d'air étant contenu dans un plan de symétrie P perpendiculaire à un axe longitudinal AL de l'hélicoptère.

Conformément au premier mode de réalisation, le moyen de soufflage comporte une prise d'air dynamique qui alimente une vanne 41 par de l'air à souffler durant le déplacement de l'hélicoptère.

Cet air à souffler est alors dirigée, suivant le besoin, par la vanne 41 vers une première et une deuxième zones d'injection 44, 45, respectivement par un premier et un deuxième canaux 42, 43.

L'air à souffler permet alors aux filets d'air traversant la veine 20 d'écoulement d'air de coller contre la périphérie 21 de la veine 20 d'écoulement d'air, notamment au niveau de sa périphérie avant 21' comprise entre les première et deuxième zones d'injection 44, 45.

Pour optimiser l'installation, quel que soit le mode de réalisation, chaque zone d'injection 44, 45 décrit un champ angulaire compris entre 0 et 180 degrés non inclus, ces zones d'injection 44, 45 n'étant néanmoins pas en contact avec la périphérie aval 21" marquée par un trait gras sur la figure 3.

De plus, chaque zone d'injection comporte au moins un orifice pour déboucher sur une lèvre de la veine 20 d'écoulement, par exemple une fente continue ou une succession d'orifices.

Enfin, on rappelle qu'il est envisageable que la vanne n'alimente ni la première zone d'injection 42, ni la deuxième zone d'injection 43. Afin d'éviter une éventuelle surpression lorsque les premier et deuxième canaux 42, 43 ne sont pas alimentés, la vanne 41 évacue l'air à souffler capté par la prise d'air vers une zone d'éjection 91 débouchant sur l'extérieur.

Plus précisément, la vanne 41 dirige alors l'air à souffler capté vers un orifice d'éjection 92 par un canal d'éjection 90, La veine d'écoulement d'air se trouvant dans la partie inférieure de la structure profilée 10. l'orifice d'éjection est agencé sur une face latérale 10' de la partie supérieure de cette structure profilée 10. L'air à souffler s'échappe alors selon la flèche F1 et ne perturbe pas le fonctionnement le rotor caréné.

Eventuellement, il est envisageable de prévoir un premier et un deuxième orifices d'éjection ménagés sur chaque face latérale 10', 10" de la structure profilée 10, les premier et deuxième orifices d'éjection étant reliés à la vanne 41 respectivement par un premier et un deuxième canaux d'éjection.

Par suite, la vanne 41 dirige l'air à souffler à éjecter vers l'orifice d'éjection qui permet d'orienter latéralement l'éjection de l'air à souffler dans le même sens que l'écoulement de l'air traversant la veine d'écoulement d'air. Ainsi, la poussée exercée par le rotor caréné est renforcée à l'aide d'une poussée générée par l'air à souffler éjecté.

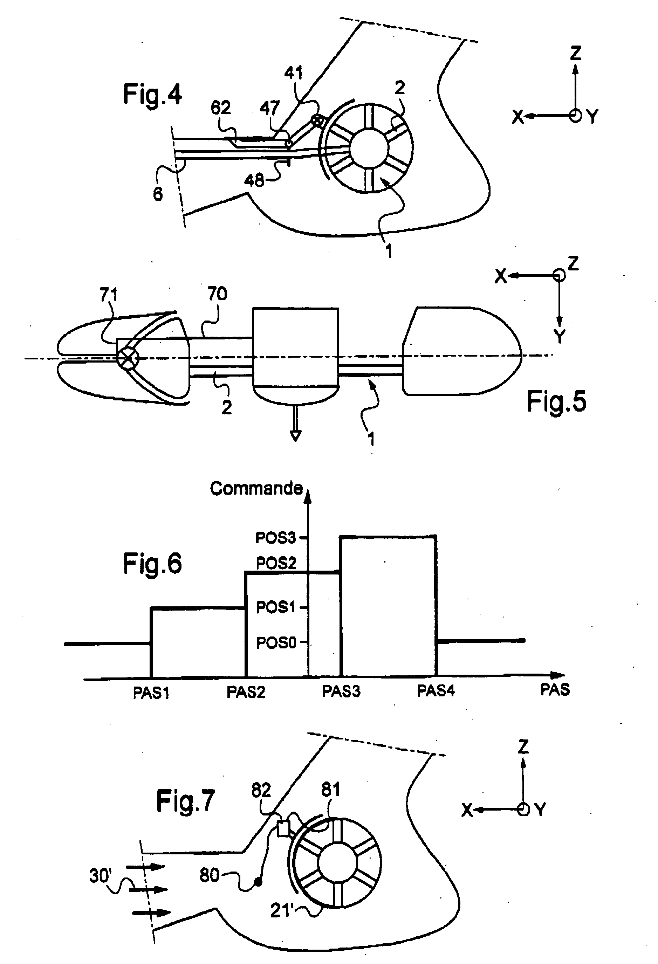

La figure 4 présente une coupe verticale schématique illustrant le deuxième mode de réalisation.

Contrairement au premier mode de réalisation, la prise d'air comporte une prise d'air statique 62 s'ouvrant sur la poutre de queue de l'hélicoptère. Cette prise d'air étant statique, le moyen de soufflage est impérativement muni d'un compresseur 47 relié à la prise d'air statique 62, ce compresseur 47 permettant au moyen de soufflage d'aspirer l'air à souffler par la prise d'air statique 62.

Le compresseur est alors agencé sur le tuyau d'acheminement qui relie la prise d'air statique à la vanne 41 du moyen de soufflage.

Le compresseur 47 peut être électrique ou, en référence à la figure 4, mécanique. En effet, la variante représenté consiste en un compresseur entraîné par une courroie 48 mise en mouvement par un arbre de transmission de puissance 6, cet arbre de transmission de puissance 6 permettant à un moteur non représenté de mettre en rotation les pales 2 du rotor caréné 1.

En outre, le compresseur mécanique est muni d'un moyen de débrayage qui déconnecte les éléments tournants du compresseur 47 de la courroie 48. Ainsi, il est possible de couper le compresseur, et donc le moyen de soufflage, à volonté.

Par ailleurs, en fonction de la situation, la vanne 41 du moyen de soufflage met en relation les premier et deuxième canaux avec le tuyau d'acheminement.

Selon une première variante schématisée à l'aide de la figure 5, afin de déterminer la position de cette vanne 41, le moyen de soufflage est commandé par un moyen de transmission 70.

Plus précisément, le pilote commande le pas de pales et manoeuvre un palonnier avec ses pieds. Ce palonnier met alors en mouvement le moyen de transmission 70 pour commander une servocommande apte à modifier ledit pas des pales par l'intermédiaire d'un plateau de commande de pas.

Par suite, le mouvement du moyen de transmission 70, une translation selon la direction longitudinale X par exemple, entraîne un mouvement de la vanne 41, tel qu'une rotation autour de son axe de symétrie. Ainsi, le moyen de transmission 70, un arbre de transmission par exemple, commande le moyen de soufflage, à savoir sa vanne 41.

Avantageusement, pour pouvoir répercuter son mouvement à la vanne 41 du moyen de soufflage, le moyen de transmission est relié à cette vanne 41 par un moyen de liaison 71.

Effectivement, il a été démontré que le pas des pales 2 du rotor pouvait donner une indication sur les canaux à alimenter en air à souffler.

Ainsi, le moyen de transmission 70, par lequel le pilote modifie le pas des pales 2 du rotor caréné arrière, s'avère intéressant pour commander le moyen de soufflage, et plus particulièrement la vanne 41 de ce moyen de soufflage.

L'intérêt de cette première variante des modes de réalisation de l'invention réside notamment dans sa simplicité, cette variante étant purement mécanique. En effet, la vanne du moyen de soufflage est commandée par un moyen de commande mécanique, à savoir le moyen de transmission 70 de la commande de pas des pales du rotor caréné.

De plus, utiliser un élément mécanique existant limite substantiellement le surpoids généré par le moyen de soufflage, ce qui n'est pas négligeable.

La figure 6 est un diagramme, présentant en abscisse le pas des pales du rotor caréné et en ordonnée la commande de la vanne 41, illustrant le fonctionnement de cette première variante.

Lorsque le moyen de transmission 70 induit un pas des pales inférieur à un pas maximal négatif PAS1, ce moyen de transmission 70 positionne la vanne 41 dans une position fermée POSO ne lui permettant pas d'alimenter ni la première zone d'injection, ni la deuxième zone d'injection. Eventuellement, en position fermée, la vanne 41 évacue l'air à souffler à l'extérieur de la structure profilée dans une zone qui n'est pas susceptible de perturber le rotor caréné via un canal d'éjection 90.

De même, quand le moyen de transmission est mis en mouvement par le pilote via son palonnier pour induire un pas des pales compris entre un pas maximal négatif PAS1 et un pas minimal négatif PAS2, ce moyen de transmission 70 positionne la vanne 41 dans une première position ouverte POS1, la vanne alimentant alors la première zone d'injection suite à une rotation la faisant passer de la position fermée POSO à la première position ouverte POS1 par exemple.

Lorsque le moyen de transmission induit un pas des pales compris entre un pas minimal négatif PAS2 et un pas minimal positif PAS3, le moyen de transmission 70 positionne la vanne 41 dans une deuxième position ouverte POS2, la vanne alimentant alors les première et deuxième zones d'injection.

De plus, quand le moyen de transmission induit un pas des pales compris entre un pas minimal positif PAS3 et un pas maximal positif PAS4, ce moyen de transmission 70 positionne la vanne 41 dans une troisième position ouverte POS3, la vanne alimentant alors uniquement la deuxième zone d'injection.

Enfin, lorsque ce moyen de transmission induit un pas des pales supérieur au pas maximal positif PAS4, le moyen de transmission 70 positionne de nouveau la vanne 41 dans une position fermée POS0.

Selon une deuxième variante représentée par la figure 7, l'aéronef comporte d'une part un capteur de pression de référence 80 disposé sur une face latérale de la structure profilée 10 entourant la veine 20 d'écoulement d'air et, d'autre part, un capteur de pression de détection 81 disposé sur la partie intermédiaire 23 de la périphérie avant 21' de la veine 20 d'écoulement d'air.

Plus précisément, le capteur de pression de détection est agencé entre les première et deuxième zones d'injection d'air à souffler.

Ces capteurs de pression de référence 80 et de détection 81 envoient respectivement un premier et un deuxième signaux vers un moyen de commande 82, le premier signal étant représentatif d'une pression de référence mesurée par le capteur de pression de référence 80 alors que le deuxième signal est représentatif d'une pression de détection mesurée par le capteur de pression de détection 81.

On note que la pression de référence est un bon indicateur compte tenu de l'agencement du capteur de pression de référence 80 par rapport à l'air incident 30', le déplacement vers le rotor caréné de cet air incident 30' étant représenté par les flèches F2.

En effet, une variation de la différence de pression entre la pression de référence et la pression de détection revient alors à signaler une variation de la pression de détection.

Par suite, en fonction de cette différence de pression entre la pression de référence et la pression de détection, le moyen de commande 82 ordonne à la vanne 41 de se positionner dans une position déterminée, à savoir la position fermée, la première position ouverte, la deuxième position ouverte ou encore la troisième position ouverte.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent, en veillant à ne pas sortir du cadre de la présente invention, déini par le texle des revendications.

## Revendications

1. Aéronef comportant une structure profilée (10) traversée par une veine (20) d'écoulement d'air pourvue d'un axe de symétrie (AX) contenu dans un plan de symétrie (P) perpendiculaire à un axe longitudinale (AL) dudit aéronef, cet aéronef possédant un rotor caréné (1) ayant une pluralité de pales (2) agencé dans ladite veine (20) d'écoulement d'air,
**caractérisé en ce que,** la périphérie (21) de ladite veine (20) d'écoulement d'air étant munie successivement selon ledit axe de symétrie (AX) d'une première lèvre (22), d'une partie intermédiaire (23) puis d'une deuxième lèvre (24), ladite première lèvre (22) ayant une première portion avant (22') située du côté de la veine le plus proche de l'avant de l'aéronef et une première portion arrière (22") du côté de la veine le plus proche de l'arrière (50) de l'aéronef, ladite deuxième lèvre (24) étant pourvue d'une deuxième portion avant (24') située du côté de la veine le plus proche de l'avant de l'aéronef et d'une deuxième portion arrière (24") du côté de la veine le plus proche de l'arrière (50) de l'aéronef, ledit aéronef est équipée d'un moyen de soufflage (40) pour réduire le bruit généré par le rotor caréné qui est apte à propulser de l'air comprimé vers une première zone d'injection (44) débouchant sur ladite première portion avant (22') et vers une deuxième zone d'injection (45) débouchant sur ladite deuxième portion avant (24').

2. Aéronef selon la revendication 1,
**caractérisé en ce que,** ledit aéronef étant un hélicoptère, ledit un rotor caréné est un rotor arrière caréné disposé dans une veine (20) d'écoulement d'air traversant une structure profilée (10) d'une dérive verticale (5) de l'hélicoptère.

3. Aéronef selon l'une quelconque des revendications précédentes,
**caractérisé en ce que,** ledit moyen de soufflage (40) propulse de l'air comprimé vers au moins ladite première lèvre (22) via ladite première zone d'injection (44) lorsque ledit rotor caréné génère une circulation d'air de ladite première lèvre (22) vers ladite deuxième lèvre (24), le moyen de soufflage (40) propulsant de l'air comprimé vers au moins la deuxième lèvre (24) via la deuxième zone d'injection (45) lorsque le rotor caréné génère une circulation d'air allant de la deuxième lèvre (24) vers la première lèvre (22).

4. Aéronef selon l'une quelconque des revendications précédentes,
**caractérisé en ce que,** le pas des pales. (2) étant compris entre un pas négatif maximal (PAS1) prédéterminé et un pas négatif minimal (PAS2) prédéterminé, ledit moyen de soufflage propulse uniquement de l'air comprimé vers ladite première lèvre (22) via ladite première zone d'injection (44), alors que ledit moyen de soufflage propulse uniquement de l'air comprimé vers ladite deuxième lèvre (24) via ladite deuxième zone d'injection (45) lorsque le pas des pales est compris entre un pas positif minimal (PAS3) prédéterminé et un pas positif maximal (PAS4) prédéterminé.

5. Aéronef selon l'une quelconque des revendications précédentes,
**caractérisé en ce que,** le pas des pales (2) étant inférieur à un pas maximal négatif (PAS1) prédéterminé, ledit moyen de soufflage ne propulse pas de l'air comprimé vers lesdites première et deuxième lèvres (22, 24).

6. Aéronef selon l'une quelconque des revendications précédentes,
**caractérisé en ce que,** le pas des pales étant supérieur à un pas maximal positif (PAS4) prédéterminé, ledit moyen de soufflage (40) ne propulse pas de l'air comprimé vers lesdites première et deuxième lèvres (22, 24).

7. Aéronef selon l'une quelconque des revendications précédentes,
**caractérisé en ce que** chaque zone d'injection (44, 45) décrit un champ angulaire compris entre 0 et 180 degrés non inclus.

8. Aéronef selon l'une quelconque des revendications précédentes,
**caractérisé en ce qu'**au moins une zone d'injection (44, 45) comporte une fente.

9. Aéronef selon l'une quelconque des revendications précédentes,
**caractérisé en ce qu'**au moins une zone d'injection (44, 45) comporte une succession d'orifices.

10. Aéronef selon l'une quelconque des revendications précédentes,
**caractérisé en ce que** ledit moyen de soufflage comporte une prise d'air (60) qui alimente en air à souffler une vanne (41) apte à faire parvenir ledit air à souffler aux première et deuxième zones d'injection (44, 45) respectivement par un premier et un deuxième canaux d'alimentation (42,43).

11. Aéronef selon la revendication 10,
**caractérisé en ce que** ladite prise d'air (60) étant une prise d'air dynamique (61) captant ledit air à souffler grâce au déplacement dudit aéronef, ladite vanne (41) est reliée à ladite prise d'air dynamique (61) par un tuyau d'acheminement (48).

12. Aéronef selon la revendication 11,
**caractérisé en ce qu'**un compresseur est agencé sur ledit tuyau d'acheminement (46) pour mettre en pression l'air à souffler.

13. Aéronef selon la revendication 10,
**caractérisé en ce que** ladite prise d'air (60) étant une prise d'air statique (62), ladite vanne (41) est reliée à ladite prise d'air statique (62) par un tuyau d'acheminement (46) muni d'un compresseur (47) permettant à ladite prise d'air statique (62) d'aspirer ledit air à souffler.

14. Aéronef selon l'une quelconque des revendications 12 à 13.
**caractérisé en ce que** ledit compresseur (47) est commandé électriquement.

15. Aéronef selon l'une quelconque des revendications 12 à 13,
**caractérisé en ce que** ledit compresseur (47) est commandé mécaniquement.

16. Aéronef selon l'une quelconque des revendications précédentes,
**caractérisé en ce que,** le pas des pales (2) d'un rotor caréné (1) étant ajusté par un pilote en manoeuvrant un palonnier relié par un moyen de transmission (70) à une servocommande qui agit sur un plateau de commande de pas apte à modifier ledit pas de pales, le moyen de soufflage est commandé par ledit moyen de transmission (70).

17. Aéronef selon l'une quelconque des revendications 1 à 18,
**caractérisé en ce que,** ledit aéronef étant pourvu d'une part d'un capteur de pression de référence (80) disposé sur une face latérale de ladite structure profilée (10) et, d'autre part, d'un capteur de pression de détection (81) agencé sur la périphérie (21) de ladite veine (20) entre les première et deuxième zones d'injection d'air (44, 45), ledit hélicoptère comporte un moyen de commande (82) recevant un premier et un deuxième signaux respectivement des capteurs de pression de référence (80) et de détection (81) pour déterminer si le moyen de soufflage (40) doit être activé.

## Claims

1. An aircraft comprising a profiled structure (10) through which passes an air-flow stream (20) provided with an axis of symmetry (AX) contained in a plane of symmetry (P) perpendicular to a longitudinal axis (AL) of said aircraft, this aircraft having a ducted rotor (1) having a plurality of blades (2) which is arranged in said air-flow stream (20), **characterised in that,** the periphery (21) of said air-flow stream (20) being provided in succession along said axis of symmetry (AX) with a first lip (22), an intermediate part (23), then a second lip (24), said first lip (22) having a first front portion (22') located on the side of the stream which is closest to the front of the aircraft and a first rear portion (22") on the side of the stream which is closest to the rear (50) of the aircraft, said second lip (24) being provided with a second front portion (24') located on the side of the stream which is closest to the front of the aircraft and with a second rear portion (24") on the side of the stream which is closest to the rear (50) of the aircraft, said aircraft is equipped with a blowing means (40) for reducing the noise generated by the ducted rotor, which means is capable of propelling compressed air towards a first injection zone (44) opening on to said first front portion (22') and towards a second injection zone (45) opening on to said second front portion (24').

2. An aircraft according to Claim 1, **characterised in that,** said aircraft being a helicopter, said one ducted rotor is a ducted rear rotor arranged in an air-flow stream (20) passing through a profiled structure (10) of a vertical tailfin (5) of the helicopter.

3. An aircraft according to any one of the preceding claims, **characterised in that** said blowing means (40) propels compressed air towards at least said first lip (22) via said first injection zone (44) when said ducted rotor generates a circulation of air from said first lip (22) towards said second lip (24), the blowing means (40) propelling compressed air towards at least the second lip (24) via the second injection zone (45) when the ducted rotor generates a circulation of air from the second lip (24) towards the first lip (22).

4. An aircraft according to any one of the preceding claims, **characterised in that,** the pitch of the blades (2) being between a predetermined maximum negative pitch (PAS1) and a predetermined minimum negative pitch (PAS2), said blowing means propels solely compressed air towards said first lip (22) via said first injection zone (44), whereas said blowing means propels solely compressed air towards said second lip (24) via said second injection zone (45) when the pitch of the blades is between a predetermined minimum positive pitch (PAS3) and a predetermined maximum positive pitch (PAS4).

5. An aircraft according to any one of the preceding claims, **characterised in that,** the pitch of the blades (2) being less than a predetermined negative maximum pitch (PAS1), said blowing means does not propel compressed air towards said first and second lips (22, 24).

6. An aircraft according to any one of the preceding claims, **characterised in that** the pitch of the blades being greater than a predetermined positive maximum pitch (PAS4), said blowing means (40) does not propel compressed air towards said first and second lips (22, 24).

7. An aircraft according to any one of the preceding claims, **characterised in that** each injection zone (44, 45) describes an angular field of an open interval of between 0 and 180 degrees.

8. An aircraft according to any one of the preceding claims, **characterised in that** at least one injection zone (44, 45) comprises a slot.

9. An aircraft according to any one of the preceding claims, **characterised in that** at least one injection zone (44, 45) comprises a succession of orifices.

10. An aircraft according to any one of the preceding claims, **characterised in that** said blowing means comprises an air intake (60) which supplies air for blowing to a valve (41) capable of making said air for blowing reach the first and second injection zones (44, 45) via a first and a second feed channel (42, 43) respectively.

11. An aircraft according to Claim 10, **characterised in that** said air intake (60) being a dynamic air intake (61) which captures said air for blowing due to the displacement of said aircraft, said valve (41) is connected to said dynamic air intake (61) by a delivery tube (46).

12. An aircraft according to Claim 11, **characterised in that** a compressor is arranged on said delivery tube (46) to pressurise the air for blowing.

13. An aircraft according to Claim 10, **characterised in that,** said air intake (60) being a static air intake (62), said valve (41) is connected to said static air intake (62) by a delivery tube (46) provided with a compressor (47) enabling said static air intake (62) to draw in said air for blowing.

14. An aircraft according to any one of Claims 12 to 13, **characterised in that** said compressor (47) is electrically controlled.

15. An aircraft according to any one of Claims 12 to 13, **characterised in that** said compressor (47) is mechanically controlled.

16. An aircraft according to any one of the preceding claims, **characterised in that,** the pitch of the blades (2) of a ducted rotor (1) being adjusted by a pilot by manoeuvring foot pedals connected by a transmission means (70) to a servocontrol which acts on a pitch-change spider capable of modifying said blade pitch, the blowing means is controlled by said transmission means (70).

17. An aircraft according to any one of Claims 1 to 16, **characterised in that,** said aircraft being provided on one hand with a reference pressure sensor (80) arranged on a lateral face of said profiled structure (10) and, on the other hand, with a detection pressure sensor (81) arranged on the periphery (21) of said stream (20) between the first and second air injection zones (44, 45), said helicopter comprises a control means (82) which receives a first and a second signal from the reference (80) and detection (81) pressure sensors respectively to determine whether the blowing means (40) needs to be activated.

## Patentansprüche

1. Luftfahrzeug mit einem profilierten Tragwerk (10), welches von einer Luftdurchtrittsöffnung (20) durchquert wird, deren Symmetrieachse (AX) in einer Symmetrieebene (P) liegt, die senkrecht zu einer Längsachse (AL) des Luftfahrzeugs liegt, wobei das Luftfahrzeug einen ummantelten Rotor (1) mit einer Mehrzahl von Rotorblättern (2) aufweist, der in der Luftdurchtrittsöffnung (20) angeordnet ist,
**dadurch gekennzeichnet, dass** der Rand (21) der Luftdurchtrittsöffnung (20) aufeinanderfolgend entlang der Symmetrieachse (AX) mit einer ersten Lippe (22), einem Zwischenbereich (23) und einer zweiten Lippe (24) versehen ist, wobei die erste Lippe (22) einen ersten vorderen Bereich (22' ) auf der Seite der Öffnung, die den Vorderteil des Luftfahrzeugs am nächsten ist und einen ersten hinteren Bereich (22" ) auf der Seite der Öffnung, die dem rückwärtigen Teil (50) des Luftfahrzeugs am nächsten ist aufweist, wobei die zweite Lippe (24) mit einem zweiten vorderen Bereich (24' ) versehen ist, der auf der Seite der Öffnung liegt, die dem Vorderteil des Luftfahrzeugs am nächsten liegt und einen zweiten hinteren Bereich (24" ) auf der Seite der Öffnung, die dem hinteren Bereich (50) des Luftfahrzeugs am nächsten liegt, wobei das Luftfahrzeug mit einer Blasvorrichtung (40) versehen ist um den von dem ummantelten Rotor erzeugten Lärm zu reduzieren, die in der Lage ist komprimierte Luft in eine erste Injektionszone zu blasen, die in dem ersten vorderen Bereich (22' ) mündet und in einen zweiten Injektionsbereich (45), in dem zweiten vorderen Bereich (24' ) mündet.

2. Luftfahrzeug nach Anspruch 1,
**dadurch gekennzeichnet, dass** das Luftfahrzeug ein Helikopter ist, der ummantelte Rotor ein ummantelter Heckmotor ist, der in einer Luftdurchtrittsöffnung (20) angeordnet ist, die einen profilierten Aufbau (10) eines vertikalen hinteren Teils (5) des Helikopters durchquert.

3. Luftfahrzeug nach einem der vorstehenden Ansprüche,
**dadurch gekennzeichnet, dass** die Blasvorrichtung (40) komprimierte Luft mindestens auf die erste Lippe (22) durch den ersten Injektionsbereich (44) bläst, während der ummantelte Rotor eine Luftzirkulation von der ersten Lippe (22) auf die zweite Lippe (24) zu erzeugt und die Blasvorrichtung (40) komprimierte Luft auf mindestens die zweite Lippe (24) durch den zweiten Injektionsbereich (45) bläst, während der ummantelte Rotor eine Luftströmung erzeugt, die sich von der zweiten Lippe (24) auf die erste Lippe (22) zu erstreckt.

4. Luftfahrzeug nach einem der vorstehenden Ansprüche,
**dadurch gekennzeichnet, dass** die Winkelstellung der Rotorblätter (2) zwischen einer vorbestimmten maximalen negativen Winkelstellung (PAS1) und einer vorbestimmten negativen minimalen Winkelstellung (PAS2) liegt, wobei die Blasvorrichtung ausschließlich komprimierte Luft auf die erste Lippe (22) über den ersten Injektionsbereich (44) bläst, während die Blasvorrichtung ausschließlich komprimierte Luft auf die zweite Lippe (24) über den zweiten Injektionsbereich (45) bläst wenn die Winkelstellung der Rotorblätter zwischen einer vorbestimmten minimalen positiven Winkelstellung (PAS3) und einer vorbestimmten maximalen positiven Winkelstellung (PAS4) liegt.

5. Luftfahrzeug nach einem der vorstehenden Ansprüchen,
**dadurch gekennzeichnet, dass** die Winkelstellung der Rotorblätter (2) kleiner ist als eine vorbestimmte maximale negative Winkelstellung (PAS1), wobei die Blasvorrichtung keine komprimierte Luft auf die erste und zweite Lippe (22, 24) richtet.

6. Luftfahrzeug nach einem der vorstehenden Ansprüche,
**dadurch gekennzeichnet, dass** wenn die Winkelverstellung der Rotorblätter größer als eine vorbestimmte maximale positive Winkelverstellung (PAS4) ist, bläst die Blasvorrichtung (40) keine komprimierte Luft auf die erste und die zweite Lippe (22, 24).

7. Luftfahrzeug nach einem der vorstehenden Ansprüche,
**dadurch gekennzeichnet, dass** jeder Injektionsbereich (44, 45) einen Winkelbereich zwischen 0° und 180° (nicht eingeschlossen) umfasst.

8. Luftfahrzeug nach einem der vorstehenden Ansprüche,
**dadurch gekennzeichnet, dass** mindestens ein Injektionsbereich (44, 45) einen Schlitz aufweist.

9. Luftfahrzeug nach einem der vorstehenden Ansprüche,
**dadurch gekennzeichnet, dass** mindestens ein Injektionsbereich (44, 45) eine Aufeinanderfolge von Öffnungen aufweist.

10. Luftfahrzeug nach einem der vorstehenden Ansprüche,
**dadurch gekennzeichnet, dass** die Blasvorrichtung eine Luftaufnahme (60) aufweist, die ein Ventil (41) mit auszublasender Luft speist, wobei das Ventil die auszublasende Luft in erste und zweite Injektionsbereiche (44, 45) über einen ersten bzw. einen zweiten Zufuhrkanal (42, 43) lenken kann.

11. Luftfahrzeug nach Anspruch 10,
**dadurch gekennzeichnet, dass** die Luftzufuhr (60) eine dynamische Luftzufuhrvorrichtung (61) ist, die die auszublasende Luft aufgrund der Fortbewegung des Luftfahrzeugs aufnimmt und wobei das Ventil (41) mit der dynamischen Luftaufnahmevorrichtung (61) über einen Zufuhrrohr (46) verbunden ist.

12. Luftfahrzeug nach Anspruch 11,
**dadurch gekennzeichnet, dass** ein Kompressor in dem Zufuhrrohr (46) angeordnet ist, um die auszublasende Luft unter Druck zu setzen.

13. Luftfahrzeug nach Anspruch 10,
**dadurch gekennzeichnet, dass** die Luftzufuhr (60) eine statische Luftzufuhrvorrichtung (62) ist, und das Ventil (41) über einen Zufuhrrohr (46) mit der statischen Luftzufuhrvorrichtung verbunden ist, welches mit einem Kompressor (47) versehen ist, der statischen Luftaufnahmevorrichtung (62) ermöglicht die auszublasende Luft anzusaugen.

14. Luftfahrzeug nach einem der Ansprüche 12 oder 13,
**dadurch gekennzeichnet, dass** der Kompressor (47) elektrisch gesteuert wird.

15. Luftfahrzeug nach einem der Ansprüche 12 oder 13,
**dadurch gekennzeichnet, dass** der Kompressor (47) mechanisch gesteuert ist.

16. Luftfahrzeug nach einem der vorstehenden Ansprüche,
**dadurch gekennzeichnet, dass** die Winkelstellung der Rotorblätter (2) eines ummantelten Rotors (1) durch einen Piloten eingestellt wird, der ein Pedal bedient, welches über eine Transmission (70) mit einer Servosteuerung verbunden ist, die auf eine Steuerplatte der Winkelstellung mit der die Winkelstellung der Rotorblätter verändert werden kann, wobei die Blasvorrichtung von der Übertragungsvorrichtung (70) gesteuert wird.

17. Luftfahrzeug nach einem der Ansprüche 1 bis 16,
**dadurch gekennzeichnet, dass** das Luftfahrzeug mit einer einerseits einem Bezugsdruckdetektor (80) versehen ist, der auf einer Seitenfläche des profilierten Aufbaus (10) angeordnet ist und andererseits mit einem Druckdetektor (81), der am Rand der Öffnungen (20) zwischen den ersten und zweiten Luftinjektionsbereichen (44, 45) angeordnet ist, wobei der Helikopter eine Steuervorrichtung (82) aufweist, die erste und zweite Steuersignale des Referenzdruckdetektors (80) und des Messdetektors (81) aufnimmt, um zu bestimmen, ob die Blasvorrichtung (40) aktiviert werden muss.
